(19) **Europäisches Patentamt**
**European Patent Office**
**Office européen des brevets**

(11) **EP 4 745 698 A1**

(12) **EUROPEAN PATENT APPLICATION**

(43) Date of publication:
**20.05.2026  Bulletin 2026/21**

(21) Application number: **24213258.7**

(22) Date of filing: **15.11.2024**

(51) International Patent Classification (IPC):
**G05B 23/02** $^{(2006.01)}$

(52) Cooperative Patent Classification (CPC):
**G05B 23/0235**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Yara International ASA**
**0277 Oslo (NO)**

(72) Inventors:
• **Padovani, Andrea**
  **0277 OSLO (NO)**
• **Vithanage, Madava Dilshan**
  **0277 OSLO (NO)**
• **Shet, Rohan**
  **0277 OSLO (NO)**
• **Fereidani, Ali Azimian**
  **0277 OSLO (NO)**

(74) Representative: **AWA Sweden AB**
**Matrosgatan 1**
**Box 5117**
**200 71 Malmö (SE)**

(54) **ANOMALY DETECTION AND ALERT SORTING METHOD IN AN INDUSTRIAL ASSET**

(57)   The present disclosure relates to a computer-implemented method for anomaly ranking of an industrial asset, wherein the method comprises receiving operational data from a plurality of sensors coupled to an industrial asset; processing the operational data to determine a deviation amount, wherein determining a deviation amount comprises determining a difference between a sensor output value and a sensor limit threshold value; defining at least two anomaly events for the at least one sensor comprising a sensor output value outside a predetermined sensor limit threshold value and ranking the at least two anomaly events, wherein ranking an anomaly event comprises: processing the operational data to determine a deviation duration, wherein determining a deviation duration comprises determining the time when the plurality of sensor output values lie outside the sensor limit threshold value; determining a severity factor for each anomaly event based on the deviation amount and deviation duration; determining a priority factor of each anomaly based on the severity factor; outputting the at least two ranked anomaly events on a user terminal based on the priority factor.

Fig. 1

# EP 4 745 698 A1

**Description**

**Technical field**

The present disclosure relates to a method and system for detection of anomaly events in industrial plants, large machinery and/or equipment and to a method for sorting and ranking a plurality of said anomalies.

**Background**

In large industrial plants, large machinery elements and mechanical equipment, monitoring and assessing asset anomalies is a cumbersome process. Due to the vast number of alerts signaling possible asset anomalies that may be present, handling said alerts manually or without a systematic approach can lead to several challenges. Firstly, it may be difficult to identify critical issues promptly, hereby leaving the integrity of the asset at risk, as well as being detrimental to the security of operators and the general operation of the asset.

Further, establishing appropriate responses and maintenance routines for addressing the vast number of anomalies that can occur in industrial plants can be difficult, due to the limited amount of available time and resources. Hence, an efficient allocation of resources and an appropriate prioritization of maintenance routines for the different assets, in order to address the appropriate alerts promptly, is needed.

Usual risk-based inspection procedures for evaluating anomalies and other maintenance strategies propose inspection rounds without the definition of an alert severity. Such inspection procedures may be merely based on an assessment of the risk or criticality of the asset, hereby wasting valuable resources and man-hours in carrying out regular supervision tasks and routines. Hence, an improved anomaly detection and alert sorting method which prioritize the right issues is long needed.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

**Summary**

According to a first aspect of the present disclosure, this and other objectives are achieved by a computer implemented method for anomaly ranking of an industrial asset, wherein the method comprises receiving operational data from a plurality of sensors coupled to an industrial asset; processing the operational data to determine a deviation amount, wherein determining a deviation amount comprises determining a difference between a sensor output value and a sensor limit threshold value; defining at least two anomaly events for the at least one sensor comprising a sensor output value outside a predetermined sensor limit threshold value and ranking the at least two anomaly events, wherein ranking an anomaly event comprises processing the operational data to determine a deviation duration, wherein determining a deviation duration comprises determining the time when the plurality of sensor output values lie outside the sensor limit threshold value; determining a severity factor for each anomaly event based on the deviation amount and deviation duration; determining a priority factor of each anomaly based on the severity factor; outputting the at least two ranked anomaly events on a user terminal based on the priority factor.

According to a second aspect of the present disclosure, determining a priority factor of an anomaly further comprises defining a criticality level factor of the asset and adapting the priority factor based on the criticality level factor of the asset.

According to a third aspect of the present disclosure, the ranked anomaly events are sorted based on at least one of the priority factor and the criticality level factor of the asset.

According to a fourth aspect of the present disclosure, operational data from the plurality of sensors is pre-processed.

According to a further aspect of the present disclosure, determining the severity factor comprises transforming the deviation duration by means of a logarithmic function after being shifted by a correction factor.

According to a further aspect of the present disclosure, determining the severity factor comprises determining the average deviation amount over the deviation duration.

According to a further aspect of the present disclosure, determining the severity factor further comprises normalizing the averaged deviation amount.

According to a further aspect of the present disclosure, the method further comprises sending anomaly inspection instructions to a user terminal.

According to a further aspect of the present disclosure, the predetermined sensor limit threshold value is determined based on a machine learning model of the asset.

According to a further aspect of the present disclosure, the sensor limit threshold value is automatically determined based on past data.

According to a further aspect of the present disclosure, the industrial asset is part of a chemical plant or machinery element.

According to a further aspect of the present disclosure, the chemical plant is a fertiliser, synthesis gas, urea, ammonium nitrate, nitric acid or ammonia plant.

According to further aspects, a system, a data processing apparatus, a computer-readable storage medium, and a computer program product configured to carry out the above discussed methods are envisaged within the present disclosure.

Brief description of the drawings

The accompanying drawings, which are included to provide a further understanding of the present disclosure and are incorporated in and constitute a part of this specification, illustrate embodiments of the disclosure and together with the description serve to explain the principles of the disclosure.

Figure 1 shows a schematic representation of a system according to an embodiment of the present disclosure.
Figure 2 shows a schematic representation of a plurality of industrial assets.
Figure 3 shows a schematic workflow of the method of the present disclosure according to an embodiment.
Figure 4 shows a schematic workflow of the method of the present disclosure according to a further embodiment.
Figure 5 shows the evolution of a sensed variable over time and the definition of different anomalies according to an embodiment of the present disclosure.
Figure 6 shows the evolution of a sensed variable over time and the definition of different anomalies according to an embodiment of the present disclosure.
Figure 7 shows a simplified schematic process flow diagram of a conventional nitric acid production plant.
Figure 8 shows a simplified schematic process flow diagram of a conventional plant for catalytic oxidation of ammonia gas.

## Detailed Description

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

Unless defined otherwise, all terms present in the current disclosure, including technical and scientific terms, have the meaning which a person skilled in the art usually gives them. For further guidance, definitions are included to further explain terms which are used in the description of the disclosure.

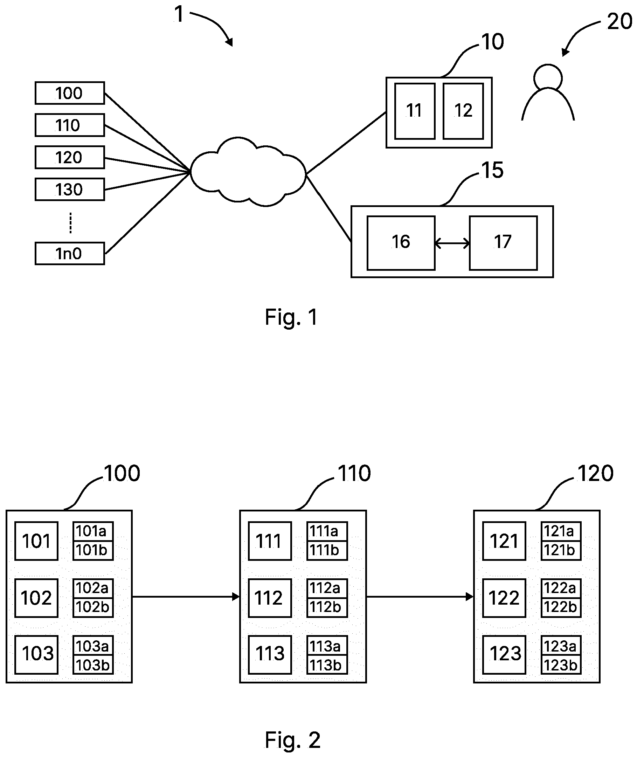

Figure 1 shows a schematic representation of a system according to an embodiment of the current disclosure. Figure 1 shows a system 1 comprising a plurality of assets (100, 110, ..., 1n0), a terminal unit 10 and a data processing unit, processing unit or system 15. Processing unit 15 comprises a processor 16 and a memory unit 17. Terminal unit 10 comprises an output unit 11, wherein the output unit may be in the form of a display. Terminal unit 10 may further comprise an input unit 12 for a user 20. In an advantageous embodiment, output unit 11 and input unit 12 may be combined in the form of a touchscreen, allowing the terminal unit to be a portable device hereby enabling the user 20 to take action swiftly upon processing of alerts, and being operably connected to processing unit 15. However, this example is not considered to be limiting; the terminal unit 10 and processing unit 15 may, for instance, be integrated in a single device, such as a mobile device or a desktop device. Further, terminal unit 10 and processing unit 15 are operably connected, by means of wired or wireless connections, to the plurality of assets 100, 110, ..., 1n0, which will be described together with Figure 2 below. Alternatively, the processing unit 15 may be part of a distributed industrial controller setting, comprising at least one microprocessor and at least one memory unit for the independent operation of the different assets. According to different embodiments, operational data from the plurality of assets may be delivered to the processing unit 15 in real-time or after storage in memory unit 17. Hence, the processing unit is configured to process the operational data as described below and to determine the different steps as disclosed by the method of the present disclosure.

Figure 2 shows a schematic representation of a plurality of assets 100, 110, 120, according to the definition of the present disclosure. The plurality of assets may, for instance, form a part of an industrial plant, such as a chemical plant. Asset 100 may refer to a constructional element and/or actuator, or to a plurality thereof, e.g. 101, 102, 103, ... , wherein each of these constructional elements and/or actuators may comprise at least one sensor 101a, 101b, 102a, 102b, 103a, 103b, .... The same applies to assets 110 and 120. Asset 100 may be, e.g., a stage within the industrial plant, wherein the products of asset 100 are used in assets 110 and 120, respectively, for further chemical reactions. However, according to the present disclosure, asset 100 may alternatively be an element, like a pump or a valve, within a process stage of an industrial plant or within machinery. In this case, assets 110 and 120 may be further elements within the process stage, or within further process stages. This will be made clear with respect to the specific embodiments described further below.

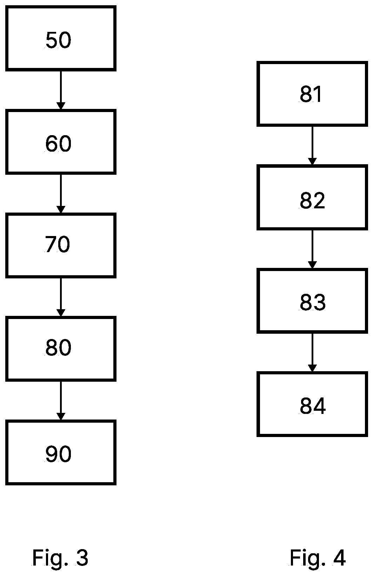

Figures 3 and 4 show different schematic workflows of methods according to different embodiments of the current disclosure which will be explained next.

According to the main embodiment of the present disclosure, a method for anomaly ranking of an industrial asset comprises receiving 50 operational data from a plurality of sensors coupled to the industrial asset. According to the present disclosure, receiving operational data may comprise receiving current, real-time data and/or past data from the plurality of sensors. Operational data may be received by means of a wired or wireless connection and/or may be already stored in memory unit 17.

According to the main embodiment of the present disclosure, the method further comprises processing the received operational data to determine a deviation amount, wherein determining the deviation amount comprises determining a difference 60 between a sensor output value and a sensor limit threshold value. According to the present disclosure a sensor limit threshold value is to be understood as a specific value related to the corresponding sensor which defines a threshold for safe or reliable operation of the sensor and/or the asset element or actuator it monitors and/or the asset itself. A sensor limit threshold value may be defined by a maximum and/or a minimum value. For example, while a temperature sensor of a pump in an asset may give a reading which is acceptable for the safe operation of the pump, such a temperature value may be compromising the operation of the asset downstream. Hence, said sensor limit threshold value may or may not be based on the sensor's technical specification. As such, said sensor limit threshold value may be defined according to different criteria, as it will be made clear below for the different embodiments. As such, a deviation $d_i$ at a time $t_i$ may be defined as

$$d_i = |\ V(t_i) - T_x\ |$$

wherein $V(t_i)$ is the sensor output value at time $t_i$, and $T_x$ is the predetermined sensor limit threshold value as will be defined below. Once a deviation has been determined for at least two sensors, operation outside of normal ranges can be ascertained and therefore at least two anomaly events are defined.

According to the main embodiment of the present disclosure, the method further comprises defining 70 at least two anomaly events for the at least two sensors detecting a sensor output value outside a predetermined sensor limit threshold value. An anomaly period is defined as a time period in which the sensor output value (V) exceeds a specific value defined as sensor limit threshold value (T). Said time period may lie in the past or may still be occurring. As such an anomaly period is defined as

$$\{(t_{start},\ t_{end}): V(t) > T_1 \text{ for all } t \in [t_{start},\ t_{end}] \text{ and } V(t) \leq T_1 \text{ for all } t \notin [t_{start},\ t_{end}]\}$$

or

$$\{(t_{start},\ t_{end}): V(t) < T_2 \text{ for all } t \in [t_{start},\ t_{end}] \text{ and } V(t) \geq T_2 \text{ for all } t \notin [t_{start},\ t_{end}]\}$$

wherein $t_{end}$ may or may not be defined if the anomaly is still occurring. As defined above, sensor limit threshold values may be defined as $T_1$ and $T_2$ for high and low level thresholds, but this will be further specified below since according to the present disclosure, there may be several level sensor limit threshold values for a sensor output value (e.g. $T_{a1}$, $T_{b1}$, ..., $T_{a2}$, $T_{b2}$, ... ).

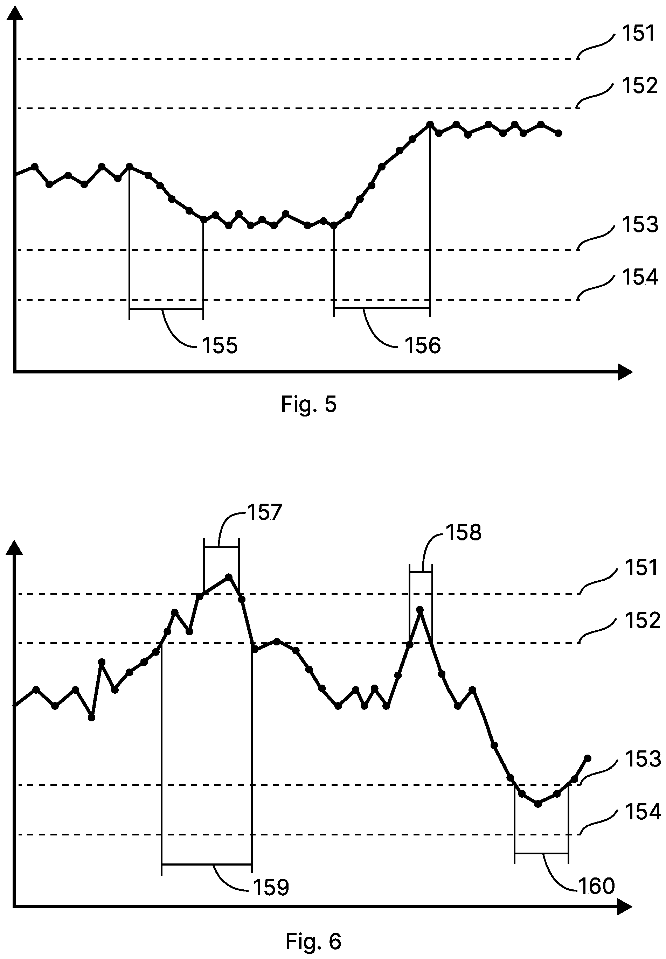

Examples of the different anomalies and threshold values can be seen with respect to Figure 5 and 6, which will be described next. Each of Figure 5 and 6 show a curve of the evolution of a sensed variable over time (dots correspond to data points). Figure 5 and 6 further show different dashed lines marking different threshold levels. Standard level sensor limit high threshold value 151, $T_{b1}$, and information level sensor limit high threshold value 152, $T_{a1}$, as well as information level sensor limit low threshold value 153, $T_{a2}$, and standard level sensor limit low threshold value 154, $T_{b2}$. However, further thresholds may be defined which categorize the sensed value as critical level sensor limit (high/low) threshold value or very critical level sensor limit (high/low) threshold value at higher / lower values than the information level and standard level sensor limit (high / low) threshold values.

While the sensor limit threshold values may be defined statically for each sensed value, according to an embodiment, the different sensor limit threshold values may be automatically determined based on past data. For example, information level or standard level sensor limit threshold values may be automatically set to first and third quartile of data values over a predetermined amount of time, e.g., last 3 months of operation, as stored in memory unit 17, while standard level sensor limit threshold values and critical level sensor limit threshold values may be determined based on the automatically determined standard level sensor limit threshold values. According to a further embodiment automatically determined threshold values may be set to never exceed static threshold values.

Figure 5 shows an anomaly according to an alternative embodiment of the current disclosure. While the sensor output value remains between the predetermined threshold values, a variation as shown in Figure 5 may still be deemed as an anomaly according to an advantageous embodiment of the current disclosure. According to this embodiment, the method of the current disclosure may further determine a rate of change of the sensed output values of the specific variable/magnitude. E.g., a rate of change can be defined as the quotient between the sensed value change within a specific operating time window, divided by the time the operating time window spans. As such, as depicted in Figure 5, two different rates of change, ROC, can be computed:

$$ROC_{155} = \frac{\Delta V}{t_{155}} \ \text{ and } \ ROC_{156} = \frac{\Delta V}{t_{156}}$$

According to the above presented formulas, the rate of change for periods 155 and 156 delivers a parameter which can be compared to a specific threshold value for triggering the determination of an anomaly based on the rate of change, instead of being based on a direct comparison with a fixed sensor threshold value. E.g., regarding the time window comprising the 6 data points along the curve prior to period 155, the sensed value remains stable, allowing the typical fluctuations which do neither amount to a great difference at the end of the time window nor to a big rate of change for the value evolution over the determined time window. The sensed output value then continues, still within the range defined by thresholds 152 and 153, in a stable manner without triggering an anomaly. However, period 156 may define an anomaly according to the current embodiment since the rate of change occurring within the corresponding operating time window (e.g. 6 points along the curve) is greater than the rate of change corresponding to the prior operating window (e.g. 6 points prior to period 156) or greater than a predetermined rate of change threshold value. As such, anomalies in the sensed values of asset variables can be sensed which otherwise would remain undetected since the sensed value is always within the predetermined thresholds. While the first change undergone in period 155 would be an allowable change ending in a stable operation at the lower subrange of the allowable sensed value range as defined by thresholds 152 and 153, period 156 defines an anomaly since the sensed value went through a too great change. According to the present embodiment, a corresponding and alternative definition of deviation amount for the detection of anomalies may therefore be defined for these cases in which no high or low level sensor output threshold value is exceeded as:

$$d_i = |ROC_i - ROC_{i-1}| \ \text{ or } \ d_i = | ROC_i - T_{ROC}|,$$

wherein $d_i$ represents a deviation amount which can be compared and analyzed with respect to the remaining absolute deviation amounts as explained above and $ROC_i$ is defined as the rate of change in time period $i$ (wherein the time period can be arbitrarily defined) and compared to a rate of change of a prior period $i$-1 or to a specific rate of change threshold $T_{ROC}$. Hence, the deviation amount may, alternatively, be defined as a difference between a rate of change of the sensed output value with respect to a predetermined threshold and/or, as before, as a difference between a sensor value and a sensor limit threshold value. Both considerations of an absolute value and a rate of change anomaly can be undertaken within the current disclosure and be comparable with an appropriate choice and scaling of the respective thresholds and hereby presenting a further advantage of the current disclosure.

In Figure 6 standard level high anomaly 157 presents a specific deviation over the standard level sensor limit high threshold value and a respective duration defined as the time in which the sensed value is over the standard level sensor limit high threshold value 151 (as represented in Figure 3). Figure 4 further shows that within the period displayed two standard level anomalies 158 and 159 have occurred. Accordingly, anomalies 158 and 159 have respective durations. Information level low anomaly 160 shows corresponding anomalies for a low threshold, with as well a respective deviation and duration. As such, the anomaly detection of the current disclosure may establish different anomalies for the displayed sensed variable or generate an anomaly which combines a plurality of the displayed anomalies. E.g.,

$$d_{157} = V(t_{157}) - T_{151},$$

$$d_{158} = V(t_{158}) - T_{152},$$

$$d_{159} = V(t_{159}) - T_{152},$$

$$d_{160} = | V(t_{160}) - T_{153} |$$

Wherein $V(t_i)$ is the sensor output value for the period spanning anomaly $i$, and $T_i$ is the threshold value for each specific anomaly (standard high, information high...), wherein $T_i$ represents a corresponding threshold value as depicted in Figure 6, i.e. anomaly deviation corresponding to anomaly 159 is computed with respect to the value of $T_{152}$. According to different embodiments of the present disclosure, the different anomalies may be treated separately or combined, such that if several anomalies of different threshold levels have occurred during the time from the last evaluation, the corresponding deviation may be determined as a combination of the different anomalies (e.g. a weighted combination).

Further, referring back to Figures 3 and 4, once the anomaly events have been defined, the method of the current disclosure additionally comprises determining an anomaly ranking 80 for the anomaly events, wherein ranking an anomaly event comprises processing the operational data of the sensor presenting an anomaly to determine a deviation duration 81, hereby determining

$$D = t_{end} - t_{start}$$

with $t_{start}$ and $t_{end}$ as defined above, or just $t_{start}$ if the anomaly still occurring and where $D$ is the deviation duration.

The method of the current disclosure further comprises determining a severity factor 82 for each anomaly event based on the deviation amount $d$ and deviation duration $D$. As such, severity factor (5) can be defined as

$$S = D \times d$$

Based on the severity factor, the method of the current disclosure comprises sorting and ranking the anomaly events according to a priority factor and outputting the ranked anomaly events 90 on a user terminal based on said priority factor.

According to a further embodiment, the anomalies may be ranked according to the threshold level exceeded by the sensed value. E.g., in the case depicted in Figure 6, anomalies 158 and 159 may be ranked as being at the same level, whereas anomaly 157 would be ranked higher. Anomaly 160 may be ranked at the same level as anomalies 158 and 159 since each of these anomalies exceed an information level threshold, whether low or high.

According to a further embodiment, determining a priority factor of an anomaly further comprises defining 83 a criticality level factor $C$ of the asset and adapting the priority factor based on the criticality level factor $C$ of the asset. For example, assets pertaining to high pressure circuits within a chemical plant may be deemed more critical than assets pertaining to low pressure circuits. Assets where a malfunction may result in an explosion, or in a leakage of hazardous substances, can be as well deemed of a higher priority. For instance, at present in most industrial processes, turbomachinery are considered to be highly critical assets. Due to the high operating speeds and, usually, high governing pressures, damages originating from malfunctioning or even failure of turbomachinery are usually of a high magnitude and high impact. Hence, these assets should preferably be marked as having a higher priority factor. Following this embodiment, the priority factor of the alert $P$ can be defined as a function of the severity factor $S$ and the criticality level factor $C$, as follows:

$$P = S \times C$$

According to a further embodiment, ranking the at least two anomaly events 80 may further comprise ranking the anomaly events 84 based on at least one of the priority factor P and the criticality level factor of the asset $C$, as depicted in Figure 4. The criticality level factor may be defined as a coefficient representing the criticality of the asset (e.g. high = 4, medium-high = 3, medium= 2, low =1). Following this embodiment, the ranked anomaly events can be further sorted according to prioritization of specific criticality level or priority factors.

According to a further embodiment, the at least two anomaly events may further be sorted according to at least one of a first level based on an alert type, a second level based on the priority factor, and a third level based on the start time of the anomaly event.

According to a further embodiment, operational data from the plurality of sensors is pre-processed. Following this embodiment, de-noising of the operational data may be conducted to improve the data's quality. Other processing of data like outlier removal, normalization and so on can be conducted.

According to a further embodiment, determining the severity factor further comprises transforming the deviation duration by means of a logarithmic function after being shifted by a correction factor. As such, we define the transformed deviation duration D' as follows:

$$D' = log\ (D + c)$$

wherein c is a non-zero correction factor, preferably a small positive value. Following this embodiment, point anomalies can be handled while limiting the significance of very long-lasting anomalies in the system. Accordingly, the severity factor S' reads as:

$$S' = D' \times d$$

and correspondingly, the priority factor is expressed as

$$P' = S' \times C$$

According to a further embodiment, determining the severity factor comprises determining the average deviation amount over the deviation duration. According to the current disclosure, different averaging techniques can be used, whether for continuous or sample data in order to obtain an averaged value of the deviation amount. According to the current disclosure, any other measures of central tendency can be employed.

According to a further embodiment, determining the severity factor further comprises normalizing the averaged deviation amount. According to the current disclosure, usual normalization procedures can be taken, like min-max, IQR, Z-score or different modulus norms.

According to a further embodiment, the method further comprises sending anomaly inspection instructions to a user terminal. Depending on the asset or element for which an anomaly is detected, instructions for the user to carry out maintenance procedures or repairs can be sent and/or displayed. Following this embodiment, based on the at least two anomaly events ranked, the method of the current disclosure may further include receiving an input from a user via input unit 12, selecting at least one of the ranked anomaly events to be sent to a user terminal.

According to a further embodiment, the predetermined sensor limit threshold value is determined based on a machine learning model of the asset, such as a digital twin of the asset. Following this embodiment, different factors like asset ageing, normal deviation from operating parameters due to operating ranges or change of operating points can be taken into account, hereby avoiding the false positives of anomaly definition.

According to a further embodiment, the industrial asset may be part of mechanical equipment, a machinery element or a chemical plant.

According to a further embodiment, the chemical plant is a fertilizer, synthesis gas, urea, ammonium nitrate, nitric acid or ammonia plant.

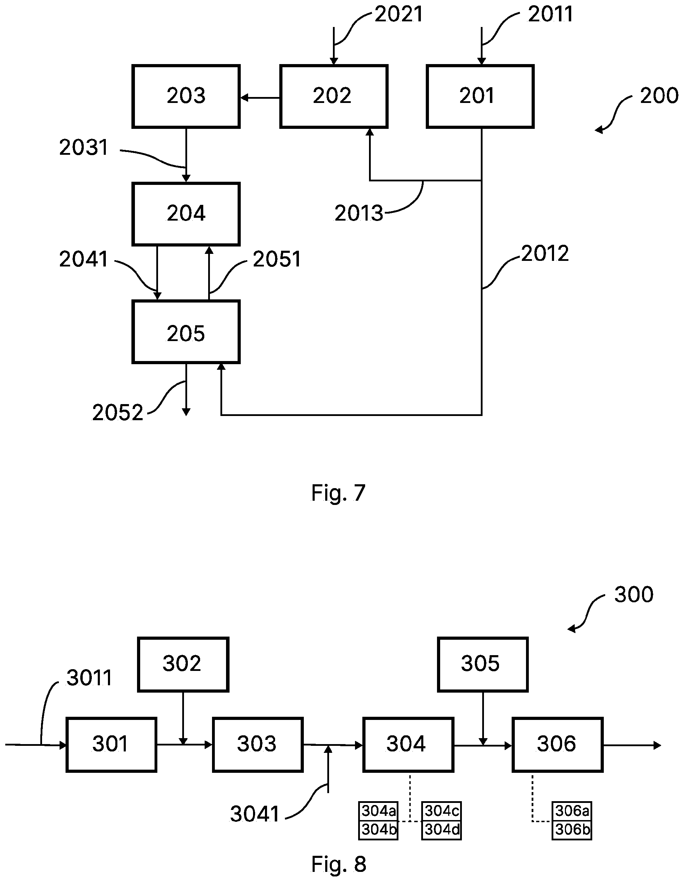

For example, Figure 7 shows a simplified schematic process flow diagram of a conventional nitric acid production plant 200, using air as the stripping gas. Ammonia is fed 2021 to an ammonia converter 202. Air is fed 2011 to a compressor 201. The compressed air from the air compressor is split into a first 2012 and a second 2013 air flow. The first air flow is fed 2012 as primary air to the ammonia converter 202, and the second air flow is fed 2013 as secondary air to the bleaching tower 205. Ammonia is oxidized to NO in the ammonia converter 202. The NO is fed to the cooler/condenser 203. In the cooler/condenser 203, the NO reacts with excess oxygen to form $NO_2$ and then the $NO_2$ reacts to form $N_2O_4$. The $NO_2$ and $N_2O_4$ are fed 2031 to the absorption tower 204, where they are converted to nitric acid and an aqueous nitric acid solution is formed. The aqueous nitric acid solution is fed 2041 to the bleaching tower 205, where dissolved nitrogen oxides are removed from the aqueous nitric acid solution by contacting the aqueous nitric acid solution with air provided by compressor 201. The nitrogen oxides removed from the aqueous nitric acid solution in the bleaching tower 205 are fed back 2051 from the bleaching tower 205 to the absorption tower 204 or optionally further up in the upstream process to be converted to nitric acid. Aqueous nitric acid solution from which the nitrogen oxides have been removed (i.e. bleached) leaves 2052 the bottom of the bleaching tower 205 as final aqueous nitric acid solution product.

Following the application of a method of the current disclosure to the nitric acid production plant 200 as represented in Figure 7, the compressor 201, the ammonia converter 202, the cooler/condenser 203, the absorption tower 204, and the bleaching tower 205 may each be defined as one asset (100, 110, ... ) pertaining to the nitric acid production plant 200. Each of the defined assets may comprise a plurality of sensors measuring at least one variable or parameter of the industrial asset, hereby defining the plurality of sensors as described above. For example, compressor 201 may comprise a plurality of sensors at the inlet and outlet, hereby comprising temperature, pressure, flowmeter and other equivalent sensors at the inlet, outlet or in between stages of compression.

Figure 8 shows a simplified schematic process flow diagram of a conventional plant for catalytic oxidation of ammonia gas which can be used for nitric acid production. In the diagram, air 3011 is fed to a compressor 301 and ammonia is fed 3041 further downstream to a conduit going through an indirect heat exchanger 304. Compressed air released from compressor 301 is introduced into heat exchanger 303 together with fuel gas introduced by pump 302. After the addition of ammonia gas 3041, the gas mixture flows via the indirect heat exchanger 304 into ammonia burner 306, together with further fuel gas introduced by pump 305. Each of the elements depicted in Figure 4 can be defined as one asset according to the method of the current disclosure. For example, indirect heat exchanger 304 may comprise inlet and outlet pressure sensor 304a and 304b, inlet and outlet temperature sensors 304c and 305d. Further, ammonia burner 306 may comprise a plurality of temperature sensors 306a, 306b, ... However, following the definitions according to the current disclosure, a flow valve within the indirect heat exchanger may be seen as an asset itself. Different actuators regulating the valve opening degree, or sensors within it or around may be seen as the respective sensors comprised by the asset. As such, it is clear from the description of these two specific applications that usual chemical plants and other production sites comprise a vast amount of assets comprising each of them an even bigger number of sensors receiving data from each of the asset's elements.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

## Claims

1. A computer-implemented method for anomaly ranking of an industrial asset, wherein the method comprises:

    a. receiving operational data from a plurality of sensors coupled to an industrial asset;
    b. processing the operational data to determine a deviation amount, wherein determining a deviation amount comprises determining a difference between a sensor output value and a sensor limit threshold value;
    c. defining at least two anomaly events for the at least one sensor comprising a sensor output value outside a predetermined sensor limit threshold value and
    d. ranking the at least two anomaly events, wherein ranking an anomaly event comprises:

        i. processing the operational data to determine a deviation duration, wherein determining a deviation duration comprises determining the time when the plurality of sensor output values lie outside the sensor limit threshold value;
        ii. determining a severity factor for each anomaly event based on the deviation amount and deviation duration;
        iii. determining a priority factor of each anomaly based on the severity factor;

    e. outputting the at least two ranked anomaly events on a user terminal based on the priority factor.

2. A method according to claim 1, wherein determining a priority factor of an anomaly further comprises defining a criticality level factor of the asset and adapting the priority factor based on the criticality level factor of the asset.

3. A method according to claim 2, wherein the ranked anomaly events are sorted based on at least one of the priority factor and the criticality level factor of the asset.

4. A method according to claim 1, wherein operational data from the plurality of sensors is pre-processed.

5. A method according to claim 1, wherein determining the severity factor comprises transforming the deviation duration by means of a logarithmic function after being shifted by a correction factor.

6. A method according to claim 1, wherein determining the severity factor comprises determining the average deviation amount over the deviation duration.

7. A method according to claim 6, wherein determining the severity factor further comprises normalizing the averaged deviation amount.

8. A method according to claim 1, wherein the method further comprises sending anomaly inspection instructions to a user terminal.

9. A method according to claim 1, wherein the predetermined sensor limit threshold value is determined based on a machine learning model of the asset.

10. A method according to claim 1, wherein the sensor limit threshold value is automatically determined based on past data.

11. A method according to claim 1, wherein the industrial asset is part of a chemical plant or machinery element.

12. A method according to claim 11, wherein the chemical plant is a fertiliser, synthesis gas, urea, ammonium nitrate, nitric acid or ammonia plant.

13. A data processing system comprising means for carrying out the method of any one of the claims 1 to 12.

14. A computer-readable storage medium comprising instructions which, when executed by a computer system, cause the computer system to carry out the method of any one of the claims 1 to 12.

15. A computer program product comprising instructions which, when the program is executed by a computer system, cause the computer system to carry out the method of any one of the claims 1 to 12.

Fig. 1

Fig. 2

```
┌──────────┐
│    50    │
└──────────┘
     │
     ▼
┌──────────┐
│    60    │
└──────────┘
     │
     ▼
┌──────────┐
│    70    │
└──────────┘
     │
     ▼
┌──────────┐
│    80    │
└──────────┘
     │
     ▼
┌──────────┐
│    90    │
└──────────┘
```

```
┌──────────┐
│    81    │
└──────────┘
     │
     ▼
┌──────────┐
│    82    │
└──────────┘
     │
     ▼
┌──────────┐
│    83    │
└──────────┘
     │
     ▼
┌──────────┐
│    84    │
└──────────┘
```

Fig. 3              Fig. 4

Fig. 5

Fig. 6

Fig. 7

Fig. 8

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/061860 A1 (PARIYANI ANKUR [US] ET AL) 5 March 2015 (2015-03-05) | 1-15 | INV.<br>G05B23/02 |
| Y | * paragraphs [0002], [0003], [0007] - [0017], [0062] - [0140], [0174] - [0190], [0234], [0281], [0289]; figures 8,10-13 * | 9 | |
| Y | US 2018/322770 A1 (SRINIVASAN SRIKANT [IN] ET AL) 8 November 2018 (2018-11-08) * paragraphs [0001], [0028] - [0035], [0045], [0053] - [0060], [0072]; figures 1,3 * | 9 | |
| A | US 2012/232756 A1 (YUAN QINGHUI [US] ET AL) 13 September 2012 (2012-09-13) * paragraphs [0044] - [0047], [0061] - [0063], [0141] - [0157] * | 1-15 | |

**TECHNICAL FIELDS SEARCHED     (IPC)**

G05B

The present search report has been drawn up for all claims

| Place of search | Date of completion of the search | Examiner |
|---|---|---|
| Munich | 10 April 2025 | Postemer, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3258

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | | Publication date | Patent family member(s) | | Publication date |
|---|---|---|---|---|---|
| US 2015061860 | A1 | 05-03-2015 | US | 2013063264 A1 | 14-03-2013 |
| | | | US | 2015061860 A1 | 05-03-2015 |
| | | | WO | 2013039911 A1 | 21-03-2013 |
| US 2018322770 | A1 | 08-11-2018 | EP | 3407150 A2 | 28-11-2018 |
| | | | US | 2018322770 A1 | 08-11-2018 |
| US 2012232756 | A1 | 13-09-2012 | BR | 112013022489 A2 | 06-12-2016 |
| | | | CA | 2828854 A1 | 07-09-2012 |
| | | | CN | 103547746 A | 29-01-2014 |
| | | | CN | 106836362 A | 13-06-2017 |
| | | | EP | 2681366 A2 | 08-01-2014 |
| | | | EP | 2990544 A1 | 02-03-2016 |
| | | | JP | 6157365 B2 | 05-07-2017 |
| | | | JP | 2014506967 A | 20-03-2014 |
| | | | KR | 20140025367 A | 04-03-2014 |
| | | | US | 2012232756 A1 | 13-09-2012 |
| | | | US | 2015191898 A1 | 09-07-2015 |
| | | | US | 2016186414 A1 | 30-06-2016 |
| | | | WO | 2012118564 A2 | 07-09-2012 |

EPO FORM P0459

For more details about this annex : see Official Journal of the European Patent Office, No. 12/82